# EUROPEAN PATENT SPECIFICATION

(11) **EP 4 122 602 B1**
(45) Date of publication and mention of the grant of the patent: **10.07.2024**
(21) Application number: 21792625.2
(22) Date of filing: 19.04.2021
(51) Int. Cl.: B01L 3/02, B01L 3/00, B01L 9/00

(54) **TRACKABLE PRECISE-SAMPLE-INJECTION DEVICE FOR MULTI-WELL PLATE**
VERFOLGBARE PRÄZISIONSPROBENINJEKTIONSVORRICHTUNG FÜR MULTIWELLPLATTE
DISPOSITIF D'INJECTION D'ÉCHANTILLON PRÉCIS POUVANT ÊTRE SUIVI POUR PLAQUE MULTIPUITS

(30) Priority: 24.04.2020 KR 20200050288; 28.08.2020 KR 20200109516
(43) Date of publication of application: 25.01.2023
(73) Proprietor: Bioneer Corporation, Daejeon 34302 (KR)
(72) Inventor: PARK, Han Oh, Sejong-si 30151 (KR); KIM, Jong-Kab, Daejeon 34008 (KR)
(74) Representative: Behr, Wolfgang
(86) International application number: PCT/KR2021/004846
(87) International publication number: WO 2021/215755

(56) References cited:
- WO-A1-2017/212099
- JP-A- 2014 533 823
- KR-A- 20160 149 109
- KR-A- 20170 128 661
- US-A- 4 919 894
- US-A1- 2018 169 658
- US-A1- 2019 101 477
- US-B1- 7 713 487

## Description

### [Technical Field]

The present disclosure relates to a trackable precise-sample-injection device for a multi-well plate, and more particularly, to a trackable precise-sample-injection device for a multi-well plate capable of not only injecting a sample into a well of a multi-well plate while preventing cross-contamination and a diagnosis error, but also conveniently recording and tracking information about the well into which the sample is injected.

### [Background Art]

Due to the global epidemic of COVID-19, the demand for molecular diagnostic tests for SARS-CoV-2 is exploding. For molecular diagnosis, it is possible to determine whether people are infected with pathogens through a nucleic acid extraction step of extracting nucleic acids from a clinical sample and a real-time polymerase chain reaction (PCR) step of amplifying the extracted nucleic acids to qualitatively and quantitatively analyzing the amplified nucleic acids.

Since the PCR was invented by Kary Mullis in 1985, the PCR has been widely used in molecular biology, molecular diagnosis, and the like because it can quickly and easily amplify a specific DNA.

The PCR/RTPCR may check whether specific DNA/RNA is present in a biological sample with high sensitivity, and thus, has been widely used in diagnosing infection with pathogenic microorganisms such as viruses. In addition, the PCR/RTPCR may also accurately quantify the number of pathogens by methods such as such as qPCR (quantitative PCR and real-time PCR), and thus, has been usefully used for monitoring therapeutic effects of HIV, HCV, and HBV viruses.

The COVID-19 is all the rage all over the world, there is an urgent need for technology that can perform mass molecular diagnosis tests since only a high-sensitivity molecular diagnosis method can accurately diagnose asymptomatic or early-stage infections.

For mass inspection, a pooling inspection method of collecting several specimens to make a single solution and performing a test has been used. For a blood screening test that detects high-risk viruses such as HIV, HBV, and HCV, a test method of combining six samples into one to perform a test has been used. Such a pooling test method is being proposed for COVID-19 mass testing. However, in a process of pooling a large amount of specimens, it is necessary to accurately record information about each clinical sample and prevent cross-contamination between the respective pooled test groups. Therefore, manually performing the pooling process may cause many errors. Although expensive automated liquid dispensing equipment for pooling has been commercialized, several expensive automated liquid dispensing equipment need to be used to process a large number of samples at the same time. In reality, there is a limit in quickly processing many samples using the expensive automated liquid dispensing equipment that takes up a large area.

Although fully automatic systems for mass inspection have been developed, these systems do not meet the urgent global inspection demand because the equipment is very complex, expensive, and does not provide a pooling function.

In a nucleic acid extraction process, usually, nucleic acids are extracted by using 0.2 ml to 1 ml of clinical sample and adding about 1 ml of extraction reagent solution to the clinical sample, and thus, the clinical sample should be able to contain up to 2 ml of solution. In order to extract nucleic acids from a large number of samples in a short time, a multi-well plate that processes as many samples as possible should be used. Therefore, a common method for simultaneous extraction of the largest number of samples is to use a deep 96-well plate that may contain 2 ml of solution per well. For mass testing, various companies have developed and released equipment for extracting nucleic acids using the deep 96-well plates. There are King Fisher automatic nucleic acid extractor developed by Thermo Fisher, MagNA Pure 96 equipment released by Roche, ExiPrep 96 Lite released by Bioneer, and the like.

In this case, in order to use the 96-well nucleic acid automatic extractor, the step of putting the sample into the 96-well plate is absolutely necessary. However, molecular diagnosis is very sensitive to a false positive due to contamination because it usually determines a positive with a high-sensitivity detection limit that may detect 100 target nucleic acids or less in a reaction solution. For example, even if the surrounding negative well is contaminated with only 1 nl of 10⁸/ml of positive sample solution, the molecular diagnosis may determine the false positive. Therefore, when extracting nucleic acids using the 96-well plate, it is very important to inject a sample so as not to contaminate microdroplets into adjacent wells.

In addition, when 96 samples are repeatedly injected into each well, there is a problem in that the sample may be accidentally injected into the wrong well, resulting in erroneous results. In particular, in the case of the pooling, it is easy to accidentally put a sample into the wrong well while counting the number of specimens to be pooled one by one. To solve this problem, equipment that automatically injects a sample into a 96-well plate has been developed, but the equipment is expensive, and swabs, such as swap specimen, are prone to malfunction in handling samples in a sample collection container.

### [Related Art Document]

(Patent Document 1) Korea Patent Publication No. 10-0637030 (October 16, 2006)
(Non-Patent Document 1) NS Sahajpal, The Journal of Molecular Diagnostics, July 29, 2020

Document WO 2017/212099 A1 shows a case or cassette for containing microplates during the filling thereof, the microplates being used in research laboratories and diagnostic laboratories in different biomedical fields. The case comprises a movable cover that exposes only the well or wells being loaded at any moment, while keeping the rest covered. This prevents the PCR mixtures from being contaminated by air and aerosols during the filling of the microplate. The cover is arranged moveably on the case. Further prior art is shown in US 4 919 894 A and US 7 713 487 B1.

### [Disclosure]

### [Technical Problem]

An object of the present disclosure is to provide a trackable precise-sample-injection device for a multi-well plate capable of preventing a diagnosis error caused by injecting a sample into a wrong well or repeatedly injecting the sample as mistakes that may occur when manually putting many samples into a multi-well plate for nucleic acid extraction in order to perform individual inspection or pooling inspection as well as conveniently recording and tracking information about the well into which the sample is injected.

In addition, an object of the present disclosure is to provide a trackable precise-sample-injection device for a multi-well plate capable of preventing an error that may cause cross-contamination by dropping a sample into a well into which the sample is injected and adjacent wells as mistakes that may occur when manually putting samples into a multi-well plate for nucleic acid extraction.

### [Technical Solution]

The objects of the present invention are solved by the trackable precise-sample-injection device for a multi-well plate according to claim 1. Preferred embodiments form the subject matter of the dependent claims.

In one general aspect, a trackable precise-sample-injection device for a multi-well plate may include: a main body 100; a multi-well plate mounting part 110 formed in a groove shape on an upper portion of the main body 100 and into which a multi-well plate 200 is inserted and mounted; a protective panel 120 positioned on an upper surface of the main body 100 including the multi-well plate mounting part 110 and including an inlet 121 penetrating vertically at a selected position to inject a sample into one selected well; a protective panel moving part 130 moving the protective panel 120 so that the inlet 121 is positioned in the selected well; a position measuring unit measuring positional information of the well of the multi-well plate 200 in which the inlet 121 is positioned; a barcode sensor 106 acquiring barcode information of a sample; and a circuit board 103 recording and communicating the positional information of the well and the barcode information of the sample and controlling the protective panel moving part 130.

The multi-well plate mounting part 110 may be formed to have a height at which the protective panel 120 and the multi-well plate 220 are spaced apart.

The inlet 121 may be formed so that a lower portion has a diameter smaller than the upper portion, and the lower portion of the inlet 121 may be provided with a hollow anti-contamination plate 122.

The protective panel moving part may include a first protective panel moving part, and the first protective panel moving part may include a Y-axis fixture 131 coupled to an edge of the main body 100, a Y-axis part 132 connecting the Y-axis fixture 131 in a Y-axis direction, a Y-axis slide 133 moving in the Y-axis direction along the Y-axis part 132, an X-axis part 134 having both ends coupled to the Y-axis slide 133 in an X-axis direction, and an X-axis slide 135 moving along the X-axis part 134 and coupled with an upper surface of the protective panel 120.

The protective panel moving part may include a second protective panel moving part, and the second protective panel moving part may include a Y-axis fixture 131-1 coupled to the edge of the main body 100, a Y-axis screw 139-1 connecting the Y-axis fixture 131-1 in a Y-axis direction, a Y-axis slide 133-1 moving in the Y-axis direction along the Y-axis screw 139-1, an X-axis screw 139-2 having both ends coupled to the Y-axis slide 133-1 in an X-axis direction, and an X-axis slide 135-1 moving along the X-axis screw 139-2 and coupled to an upper surface of the protective panel 120.

The second protective panel moving part may further include a motor 139-3 for operating the Y-axis screw 139-1 and the X-axis screw 139-2.

The position measuring unit may include a plurality of permanent magnets 124 provided in the protective panel 120, and a magnetic sensor 105 formed in the main body 100 to detect the permanent magnets 124.

The position measuring unit may further include a pure iron rod 104 that is formed on the magnetic sensor 105 and has a length corresponding to a movement length of the protective panel 120.

The position measuring unit may include at least one permanent magnet 124 provided on the Y-axis slide 133-1 and the X-axis slide 135-1, and a magnetic sensor 105 formed on the main body 100 to detect the permanent magnet 124.

The position measuring unit may include one or more permanent magnets 124 provided on a Y-axis slide block 140, and a magnetic sensor 105 detecting the permanent magnets 124.

The protective panel moving part may further include one or more Y-axis screws 139-1 and a Y-axis driving unit 141 connecting the one or more Y-axis screws 139-1 to operate simultaneously.

The Y-axis driving unit 141 may include one or more permanent magnets 124 and a magnetic sensor 105 detecting the permanent magnets 124.

### [Advantageous Effects]

According to a trackable precise-sample-injection device for a multi-well plate according to the present disclosure, it is possible to prevent diagnosis error to perform a large number of tests without risk of the diagnosis error as well as track and manage all sample injection operations performed by an operator to increase accuracy of diagnosis.

### [BRIEF DESCRIPTION OF THE DRAWINGS]

FIGS. 1 to 3 are perspective views of a trackable precise-sample-injection device for a multi-well plate according to the present disclosure.
FIG. 4 is a perspective view of a pure iron rod, a sensor, and the like mounted inside a main body of the trackable precise-sample-injection device for a multi-well plate according to the present disclosure.
FIG. 5 is a diagram conceptually illustrating a trackable precise-sample-injection device for a multi-well plate according to the present disclosure.
FIGS. 6 to 11 are perspective views of the trackable precise-sample-injection device for a multi-well plate according to the present disclosure.
FIGS. 12 and 13 are partial perspective views of the trackable precise-sample-injection device for a multi-well plate according to the present disclosure.
FIGS. 14 and 15 are partial perspective views of the trackable precise-sample-injection device for a multi-well plate according to the present disclosure.

### [Best Mode]

Hereinafter, a trackable precise-sample-injection device for a multi-well plate according to an embodiment of the present disclosure as described above will be described in detail with reference to the accompanying drawings.

A trackable precise-sample-injection device for a multi-well plate according to an embodiment of the present disclosure is configured to largely include a main body 100, a multi-well plate mounting part 110, a protective panel 120, a protective panel moving part 130, a position measuring unit, a barcode sensor 106, and a circuit board 103.

The main body 100 may include a body upper plate 101 and a body lower plate 102 that are combined by being divided in a vertical direction.

The multi-well plate mounting part 110 is a configuration in which the multi-well plate 200 is inserted into the main body 100 and positioned, and is formed in the main body 100 in a groove shape corresponding to a shape of the multi-well plate 200, so the multi-well plate 200 is seated and positioned.

The protective panel 120 is positioned on an upper surface of the main body 100 including the multi-well plate mounting part 110 and is formed to penetrate in a vertical direction at a selected position, and includes an inlet 121 through which a sample may be injected. In this case, the inlet 121 is preferably formed in a center of the protective panel 120, but is not limited thereto. In addition, the protective panel 120 is formed to be movable along the upper surface of the main body 100, and thus, the inlet 121 for injecting the sample may be positioned on the selected well and the remaining wells are covered with the protective panel 120, thereby preventing cross-contamination during the injection of the sample.

The protective panel moving part 130 is coupled to the protective panel 120, and thus, is formed to be movable in a horizontal direction of the protective panel 120. In this way, by moving the protective panel 120 in the horizontal direction, the inlet 121 is positioned on a desired well.

The position measuring unit may include a magnetic sensor 105 to acquire the positional information of the well, and the barcode sensor 106 may acquire barcode information of a specimen sample. The circuit board 103 recognizes the positional information of the well and the barcode information of the specimen sample and records the recognized positional information and barcode information in a storage means such as a computer. To this end, the circuit board 103 includes a communication unit.

That is, in the trackable precise-sample-injection device for a multi-well plate according to the embodiment of the present disclosure, the position measuring unit inputs the barcode information of the specimen sample through the barcode sensor while inputting the position of the inlet 121 through the positional information of the well in real time, thereby preventing errors through the input records and tracking errors that have occurred.

In this way, in the process of causing an operator to repeatedly inject numerous specimen samples, it is possible to prevent the occurrence of diagnosis errors such as the operator putting the specimen sample into different wells.

As described above, the trackable precise-sample-injection device for a multi-well plate according to the embodiment of the present disclosure may input and record the positional information of the well and the barcode information of the sample in real time, thereby preventing the operator's malfunction and tracking the errors that have occurred.

The trackable precise-sample-injection device for a multi-well plate according to the embodiment of the present disclosure will be described in more detail.

As described above, the protective panel 120 is positioned on the upper portion of the multi-well plate 200 and moved in the horizontal direction, and is positioned to be upwardly spaced apart from the multi-well plate 200. That is, when the protective panel 120 is moved in the horizontal direction to position the inlet 121 into the selected well, the sample of the upper portion of the multi-well plate 200 may come into contact with the protective panel 120 and may be smeared. This may incur contamination of other wells by the sample.

To this end, the multi-well plate mounting part 110 has a height so as to be spaced apart from the protective panel 120 when the multi-well plate 200 is mounted. That is, the multi-well plate mounting part 110 is formed so that the protective panel 120 and the multi-well plate 200 are spaced apart from each other, thereby preventing the sample from coming into contact with a lower surface of the protective panel 120.

In this case, it is preferable that the multi-well plate mounting part 100 is formed so that the protective panel 120 and the multi-well plate 200 are spaced apart from each other at an interval of 1 mm to 5 mm. However, it goes without saying that various embodiments are possible without limitation as long as it is possible to smoothly inject the sample into the selected well and prevent the contact with the sample.

In addition, the protective panel 120 may further include a panel handle 123 formed on the upper surface thereof so that an operator may move the panel handle 123.

The inlet 121 has a lower portion formed smaller than a diameter of the upper portion, and the lower portion thereof is provided with a hollow anti-contamination plate 122. The anti-contamination plate 122 is made of a material capable of absorbing a sample.

That is, when a sample is injected into the well of the multi-well plate 200 with a pipette, because the sample smeared from the outside is smeared on the groove of the inlet 121 to contaminate other wells, the pipette may incur the cross-contamination. To this end, by providing the anti-contamination plate 122 in the lower portion of the inlet 121, the anti-contamination plate 122 is replaced when the contamination occurs, thereby preventing the cross-contamination.

In this case, the hollow of the anti-contamination plate 122 is preferably formed to be smaller than the diameter of the well. This may prevent the sample from being injected into other wells. More preferably, the diameter of the inlet 121 is formed to be larger than the diameter of the well to facilitate the injection of the sample and the hollow of the anti-contamination plate 122 is formed to be smaller than the diameter of the well to facilitate the replacement of the anti-contamination plate 122, thereby preventing the sample from being injected into other wells as described above. In this case, the anticontamination plate 122 can be formed in a polygonal shape such as a quadrangle or a pentagon, but is preferably formed in a hollow donut shape.

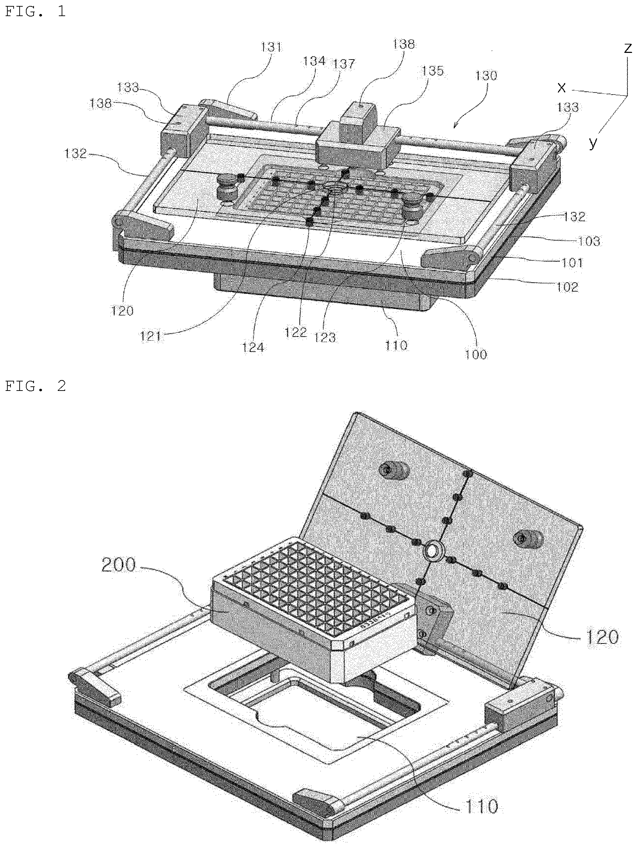

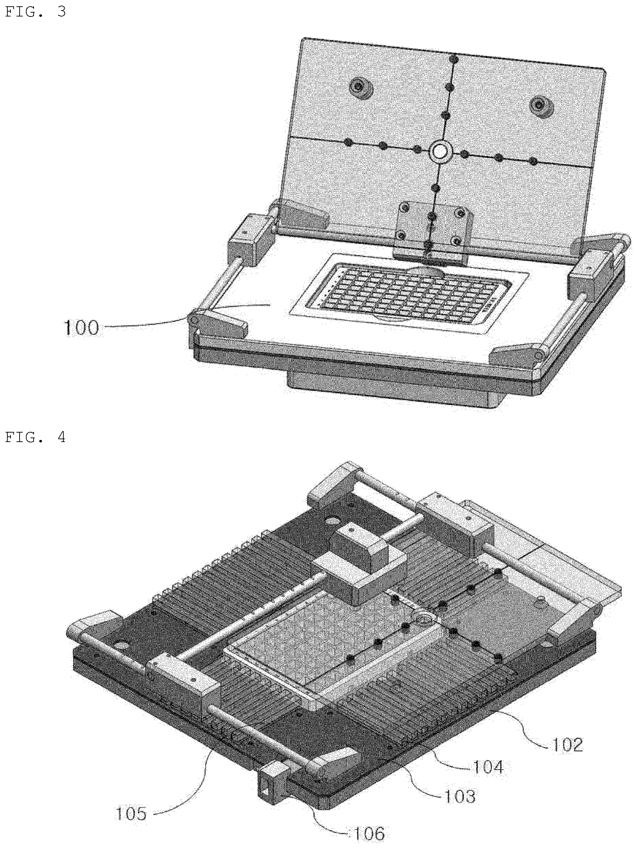

Referring to FIGS. 1 to 4, the protective panel moving part 130 may include a first protective panel moving part that is configured to include a Y-axis fixture 131 coupled to an edge of the main body 100, a Y-axis part 132 connecting the Y-axis fixture 131 in a Y-axis direction, a Y-axis slide 133 moving in the Y-axis direction along the Y-axis part 132, an X-axis part 134 having both ends coupled to the Y-axis slide 133 in an X-axis direction, and an X-axis slide 135 moving along the X-axis part 134 and coupled with the protective panel 120.

That is, in the first protective panel moving part, the X-axis slide 135 may move along the X-axis part 134 to control the position of the inlet 121 in the X-axis direction, and the Y-axis slide 133 may move along the Y-axis part 132 to control the position of the inlet 121 in the Y-axis direction.

In addition, the Y-axis part 132 and the X-axis part 134 are provided with shaft grooves 137 formed as grooves at regular intervals so that they may stop at regular positions of each well of the multi-well plate 200, and may easily stop at a regular position by a ball plunger 138. Through this configuration, the positions of all the wells of the multi-well plate 200 and the inlet 121 of the protective panel 120 may be easily aligned manually.

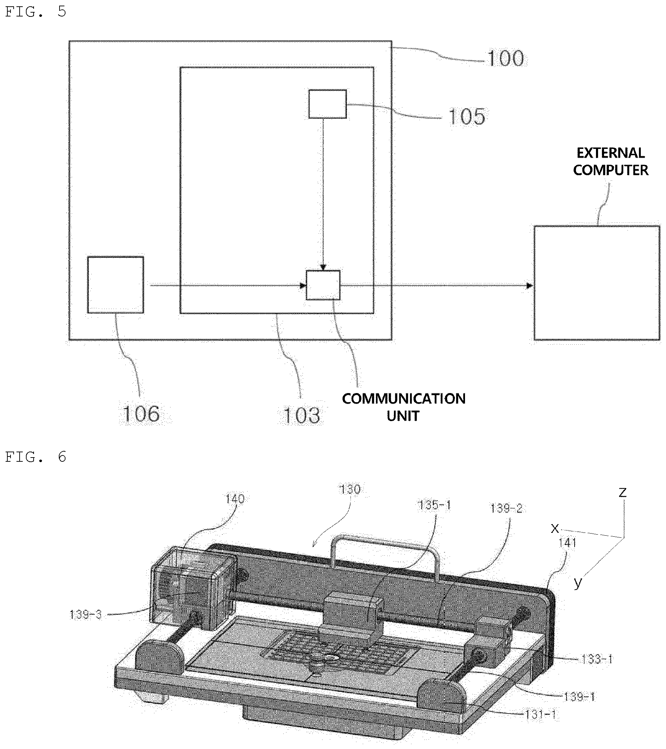

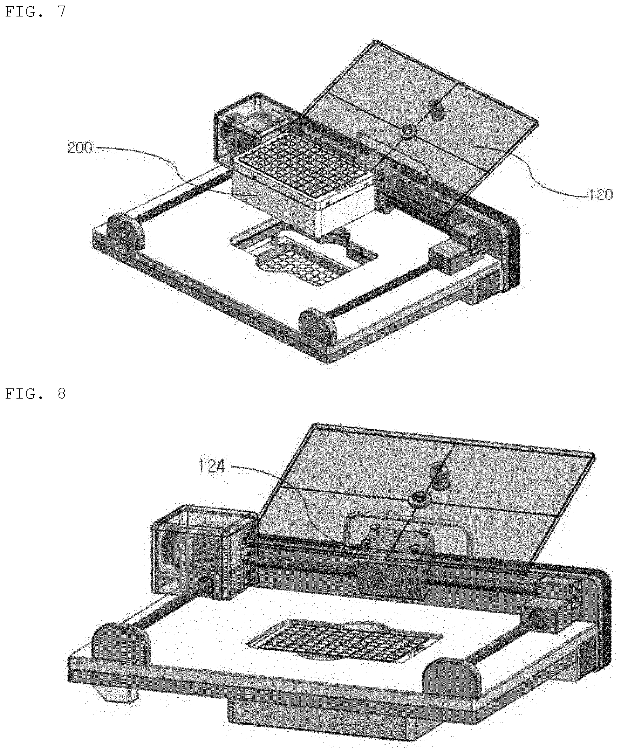

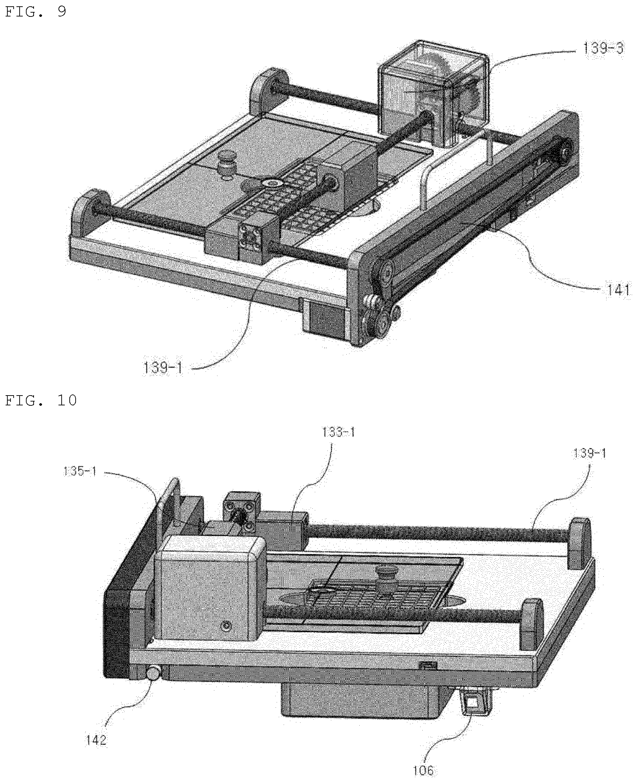

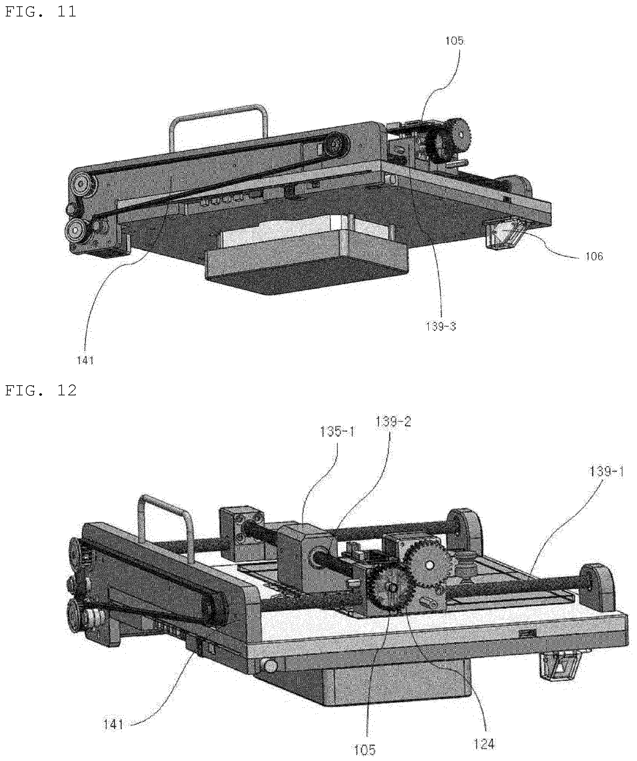

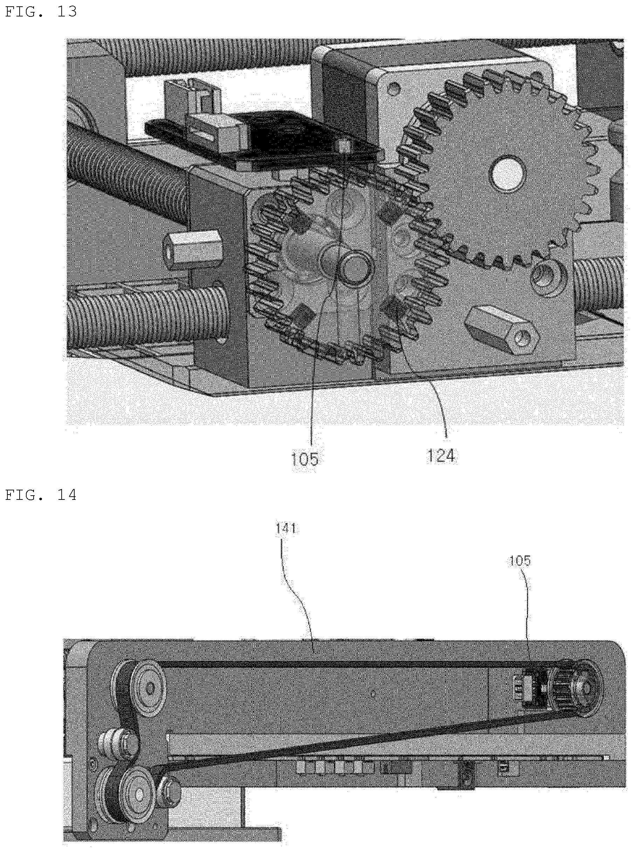

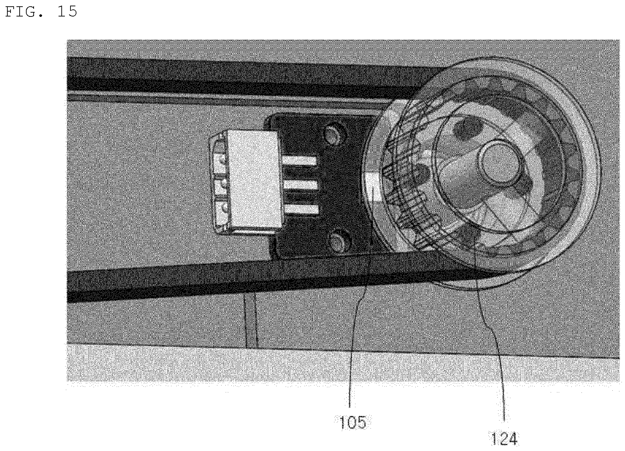

In addition, referring to FIGS. 6 to 15, the protective panel moving part may further include an automated second protective panel moving part.

The second protective panel moving part is configured to include a Y-axis fixture 131-1 coupled to the edge of the main body 100, a Y-axis screw 139-1 connecting the Y-axis fixture 131-1 in the Y-axis direction, a Y-axis slide 133-1 moving in the Y-axis direction along the Y-axis screw 139-1, an X-axis screw 139-2 having both ends coupled to the Y-axis slide 133-1 in the X-axis direction, an X-axis slide 135-1 coupled with the upper surface of the protective panel 120 while being moved along the X-axis screw 139-2, and a motor 139-3 for supplying power to the Y-axis screw 139-1 and the X-axis screw 139-2 to operate.

The Y-axis screw 139-1 is coupled to engage with the Y-axis slide 133-1, with both ends being rotatably coupled to the Y-axis fixture 131-1 in the Y-axis direction, and is formed to move the Y-axis slide 133-1 in the Y-axis direction through the shaft rotation.

At least one Y-axis screw 139-1 may be provided, and one or more Y-axis screws 139-1 are operably formed at the same time through the Y-axis driving unit 141. The Y-axis driving unit 141 may be configured of a timing belt.

The X-axis screw 139-2 is coupled to engage with the X-axis slide 135-1, with both ends being axially rotatably coupled to the Y-axis slide 133-1 in the X-axis direction, and is formed to move the X-axis slide 135-1 in the X-axis direction through the shaft rotation.

The motor 139-3 may be positioned in the lower portion of the main body or the upper portion of the Y-axis slide 133-1, and may be connected to the Y-axis screw 139-1 and the X-axis screw 139-2 by a connection element such as a gear or a timing belt.

As described above, when the Y-axis slide 133-1 and the X-axis slide 135-1 move with the motor 139-3 for automation, it is possible to precisely control the position compared to the operation of the operator.

The position measuring unit includes a plurality of permanent magnets 124 in the protective panel 120 and a magnetic sensor 105 detecting the permanent magnets 124.

It is preferable that the plurality of permanent magnets 124 are arranged in a cross direction, which is the X-axis direction and the Y-axis direction, from the center of the protective panel 120 in order to identify accurate positional information. The magnetic sensor 105 may be provided between the body upper plate 101 and the body lower plate 102 constituting the main body 100 in the vertical direction. In particular, the magnetic sensor 105 is preferably provided on the upper portion of the circuit board 103 between the body upper plate 101 and the body lower plate 102.

In addition, the magnetic sensor 105 is formed on the circuit board 103, and preferably provided corresponding to a row and column of the well constituting the multi-well plate 200.

As described above, the position measuring unit may measure the position information of the inlet 121 and the well according to the movement of the protective panel 120 by causing the magnetic sensor 105 to recognize the permanent magnet 124 provided in the protective panel 120.

In addition, the position measuring unit may be configured to further include a pure iron rod 104 formed to have a predetermined length in rows and columns of the well, which is formed so that the magnetic sensor 105 is positioned in the center in the longitudinal direction.

That is, since the protective panel 120 can move to all wells, the magnetic sensors 105 corresponding to each well need to be included in order to measure the position thereof. For example, in the case of a 96-well plate, 96 magnetic sensors 105 are required, which is disadvantageous in cost and space availability.

To this end, the positional information sensor of the present disclosure includes the pure iron rod 104, thereby saving the provision of the magnetic sensor 105. The pure iron rod 104 is easily magnetized by a magnet, and as a result, when the permanent magnet 124 is positioned on the upper portion of the pure iron rod 104, the positions in the X-axis and Y-axis directions may be measured at any position.

In addition, since the position of the pure iron rod 104 may be measured through magnetization according to the movement of the protective panel 120, the pure iron rod 104 is preferably formed to have a length corresponding to the length of the movement of the protective panel 120.

In addition, when the protective panel moving part is configured of an automated second protective panel moving part, the number of rotations of the screws of each axis of the Y-axis slide 133-1 and the X-axis slide 135-1 is counted by the motor 139-3 to identify the position of the inlet, so the number of magnetic sensors may be reduced to 1 and 2.

The position measuring unit is configured to include one or more permanent magnets 124 provided in the Y-axis slide block 140 and the Y-axis driving unit 141, and the magnetic sensor 105 detecting the permanent magnets 124.

The permanent magnet 124 is preferably arranged inside the gear or the timing pulley in order to identify accurate positional information, but is not limited thereto. The magnetic sensor 105 may be provided adjacent to the gear or the timing pulley.

The Y-axis slide 133-1 and the X-axis slide 135-1 may further include the permanent magnet 124, and the body upper plate 101 may further include the magnetic sensor 105 detecting the permanent magnet 124.

As described above, the position measuring unit may measure the position information of the inlet 121 and the well according to the movement of the protective panel 120 by causing the magnetic sensor 105 to recognize the permanent magnet 124 provided in the Y-axis slide block 140, the Y-axis driving unit 141, the Y-axis slide 133-1, and the X-axis slide 135-1. In addition, it is possible to set the protective panel 120 to move to the same position when power is applied.

In the trackable precise-sample-injection device for a multi-well plate according to the embodiment of the present disclosure having the above configuration, the barcode sensor 106 is mounted on the circuit board 103 to which the magnetic sensor 105 is arranged and attached, so the barcode sensor 106 is closely assembled by the body lower plate 102, and only a reader and a power terminal of the barcode sensor 106 are exposed. The circuit board has a circuit for controlling X-axis and Y-axis motors and a circuit for wireless communication.

Accordingly, in the circuit board 103, when the multi-well plate 200 is inserted into the multi-well plate mounting part 110 and the protective panel 120 is covered, the magnetic sensors 105 recognize the current position, and on the contrary, when the protective panel 120 is lifted and pushed back, the signal coming from the magnetic sensor 105 disappears.

In addition, it is possible to record and track the movement history of the protective panel 120 by always taking positional information in the X-axis direction-Y-axis direction of the magnetic sensor 105 at regular time intervals. Meanwhile, sample information attached to a sample container may be read continuously from the barcode sensor 106.

By comparing the positional information of the inlet 121 recorded on the time axis and the barcode information, it is possible for experimenters to conveniently input all information injected into the multi-well plate 200 and track the entire injection process of the experimenters.

Such information may be recorded on the circuit board 103 of the main body and transmitted and recorded by wire or wirelessly to an external computer. As a result, it is possible to achieve the second object of the present disclosure of conveniently injecting the sample information in all the injection processes and tracking all the processes of the operator.

The above-described method includes automatically transferring the protective panel at a well interval using the screw or the timing belt by a linear motor, a servo motor, or a stepping motor capable of controlling the position in the X-axis direction and the Y-axis direction for movement in the X-axis direction-Y-axis direction. As an example of such an automatic movement method, as illustrated in FIG. 6, the X-axis is formed of a screw, and the screw and the motor may be connected using a gear to transfer the protective panel at a predetermined interval in the X-axis direction, and the Y-axis is formed of a plurality of screws, and the plurality of screws may be installed to simultaneously operate using the motor and the timing belt to automatically perform X and Y motions.

The precision-sample injection device for a multiwell plate according to the embodiment of the present disclosure may be controlled using a tablet PC or the like. At this time, the precision-sample injection device for a multi-well plate according to the embodiment of the present disclosure may be linked through wireless communication such as Bluetooth, and may include a jack that may connect a cable or the like.

In addition, when the trackable precise-sample-injection device for a multi-well plate according to the embodiment of the present disclosure is automated, the trackable precise-sample-injection device may include a pooling function suitable to perform pooling inspection using an external computer such as the above-described tablet PC. In this case, the pooling inspection may be controlled by setting the number of pooling inspection samples through the external computer.

As an example, when the number of pooling inspection samples is set to 5, after the barcode of the first sample is recognized by the barcode sensor, the protective panel including the inlet does not move until a barcode of a fifth sample is recognized by the barcode sensor, and maintains a fixed state in a selected first well W1. Then, when a barcode of a sixth sample is recognized by the barcode sensor, the protective panel moves and the inlet is positioned in a selected second well W2. Accordingly, the position of the inlet is fixed in the second well W2 until a barcode of a tenth sample is recognized by the barcode sensor, and when a barcode of an eleventh sample is recognized by the barcode sensor, the protective panel moves to a position of a selected third well W3.

A method of injecting a specimen sample using a trackable precise-sample-injection device for a multi-well plate according to an embodiment of the present disclosure will be described.

### 1. Multi-well Plate Injection and Cytolysis Solution Injection

The protective panel 120 is open, and the multi-well plate 200 is inserted and positioned into an empty multiwell plate mounting part 110. In this case, in order not to change the direction of the multi-well plate 200, the multi-well plate 200 can be inserted to match a portion where the edge of the multi-well plate 200 is cut and a portion where the edge of the mounting part is cut. After the multi-well plate 200 is mounted, 200 ul of cytolysis solution is repeatedly added 12 times with an 8-channel pipette.

### 2. Cover Protective Panel and Mount Anticontamination Plate

The protective panel 120 is covered and the anticontamination plate 122 is put on the inlet 121.

### 3. Sample Injection

After the inlet is positioned at A1 position using the panel handle 123, a tip is inserted into a pipette and a barcode attached to a sample tube is recognized, the sample tube is open to obtain a certain amount, for example, 400 µl of sample solution with a pipette so that the sample solution does not stick to a tip surface, the obtained sample solution is injected while taking care not to touch the anti-contamination plate of the inlet groove, and then, the tip is discarded in a waste bin, a lid of the sample tube is closed, the tip moves to its original position, and a new tip is put. This is repeated to inject 96 samples into a multi-well plate. After dissolving the sample by leaving the sample at 60°C for 10 minutes, the protective panel is pushed back with the panel handle, a magnetic bead solution is put 12 times with an 8-channel pipette, and then, the multi-well plate is taken out and mounted on an automatic nucleic acid extractor along with an extraction kit, thereby extracting nucleic acids.

### [Description of Reference Signs]

100: Main body
101: Body upper plate
102: Body lower plate
103: Circuit board
104: Pure iron rod
105: Magnetic sensor
106: Bar code sensor
110: Multi-well plate mounting part
120: Protective panel
121: Inlet
122: Anti-contamination plate
123: Panel handle
124: Permanent magnet
130: Protective panel moving part
131: Y-axis fixture
132: Y-axis part
133: Y-axis slide
134: X-axis part
135: X-axis slide
137: Shaft groove
138: Ball plunger
131-1: Y-axis fixture
133-1: Y-axis slide
135-1: X-axis slide
139-1: Y-axis screw
139-2: X-axis screw
139-3: Motor
140: Y-axis slide block
141: Y-axis driving unit
142: Power supply

## Claims

1. A trackable precise-sample-injection device for a multi-well plate, comprising:
a main body (100);
a multi-well plate mounting part (110) formed in a groove shape on an upper portion of the main body (100) and configured for insertion and mounting of the multi-well plate (200);
a protective panel (120) positioned on an upper surface of the main body (100) including the multi-well plate mounting part (110) and including an inlet (121) penetrating vertically at a selected position to inject a sample into one selected well;
a protective panel moving part (130) moving the protective panel (120) so that the inlet (121) is positioned in the selected well;
a position measuring unit measuring positional information of the well of the multi-well plate (200) in which the inlet (121) is positioned;
a barcode sensor (106) acquiring barcode information of a sample; and
a circuit board (103) recording and communicating the positional information of the well and the barcode information of the sample and controlling the protective panel moving part (130).

2. The trackable precise-sample-injection device of claim 1, wherein the multi-well plate mounting part (110) is formed to have a height at which the protective panel (120) and the multi-well plate (200) are spaced apart.

3. The trackable precise-sample-injection device of claim 1, wherein the inlet (121) is formed so that a lower portion has a diameter smaller than the upper portion, and
the lower portion of the inlet (121) is provided with a hollow anti-contamination plate (122).

4. The trackable precise-sample-injection device of claim 1, wherein the protective panel moving part (130) includes a first protective panel moving part, and
the first protective panel moving part includes
a Y-axis fixture (131) coupled to an edge of the main body (100),
a Y-axis part (132) connecting the Y-axis fixture (131) in a Y-axis direction,
a Y-axis slide (133) moving in the Y-axis direction along the Y-axis part (132),
an X-axis part (134) having both ends coupled to the Y-axis slide (133) in an X-axis direction, and
an X-axis slide (135) moving along the X-axis part (134) and coupled with an upper surface of the protective panel (120).

5. The trackable precise-sample-injection device of claim 1, wherein the protective panel moving part (130) includes a second protective panel moving part, and
the second protective panel moving part includes:
a Y-axis fixture (131-1) coupled to the edge of the main body (100),
a Y-axis screw (139-1) connecting the Y-axis fixture (131-1) in a Y-axis direction,
a Y-axis slide (133-1) moving in the Y-axis direction along the Y-axis screw (139-1),
an X-axis screw (139-2) having both ends coupled to the Y-axis slide (133-1) in an X-axis direction, and
an X-axis slide (135-1) moving along the X-axis screw (139-2) and coupled to an upper surface of the protective panel (120).

6. The trackable precise-sample-injection device of claim 5, wherein the second protective panel moving part further includes a motor (139-3) for operating the Y-axis screw (139-1) and the X-axis screw (139-2).

7. The trackable precise-sample-injection device of claim 1, wherein the position measuring unit includes a plurality of permanent magnets (124) provided in the protective panel (120), and a magnetic sensor (105) formed in the main body (100) to detect the permanent magnets (124).

8. The trackable precise-sample-injection device of claim 7, wherein the position measuring unit further includes a pure iron rod (104) that is formed on the magnetic sensor (105) and has a length corresponding to a movement length of the protective panel (120).

9. The trackable precise-sample-injection device of claim 5, wherein the position measuring unit includes at least one permanent magnet (124) provided on the Y-axis slide (133-1) and the X-axis slide (135-1), and a magnetic sensor (105) formed on the main body (100) to detect the permanent magnet (124).

10. The trackable precise-sample-injection device of claim 9, wherein the position measuring unit includes one or more permanent magnets (124) provided on a Y-axis slide block (140), and a magnetic sensor (105) detecting the permanent magnets (124).

11. The trackable precise-sample-injection device of claim 5, wherein the protective panel moving part (130) further includes one or more Y-axis screws (139-1) and a Y-axis driving unit (141) connecting the one or more Y-axis screws (139-1) to operate simultaneously.

12. The trackable precise-sample-injection device of claim 11, wherein the Y-axis driving unit (141) includes one or more permanent magnets (124) and a magnetic sensor (105) detecting the permanent magnets (124).

## Patentansprüche

1. Vorrichtung zur präzisen und rückverfolgbaren Probeninjektion für eine Multiwell-Platte, wobei die Vorrichtung aufweist:
einen Hauptkörper (100);
einen Multiwell-Platten-Montageabschnitt (110), der die Form einer Kerbe an einem oberen Abschnitt des Hauptkörpers (100) annimmt und derart konfiguriert ist, dass er das Einsetzen und Befestigen der Multiwell-Platte (200) ermöglicht;
eine Schutzplatte (120), die auf einer oberen Fläche des Hauptkörpers (100) positioniert ist, die den Multiwell-Platten-Montageabschnitt (110) aufweist, und die einen Einlass (121) aufweist, der an einer ausgewählten Position vertikal eindringt, um eine Probe in einen ausgewählten Hohlraum zu injizieren;
ein Schutzplatten-Bewegungsteil (130), mit dem die Schutzplatte (120) derart bewegt werden kann, dass der Einlass (121) in dem ausgewählten Hohlraum positioniert wird;
eine Positionsmesseinheit zum Messen von Positionsinformationen des Hohlraums der Multiwell-Platte (200), in dem der Einlass (121) positioniert ist;
einen Barcode-Sensor (106) zum Erfassen von Barcode-Informationen einer Probe; und
eine Leiterplatte (103) zum Speichern und Kommunizieren der Positionsinformationen des Hohlraums und der Barcodeinformationen der Probe sowie zum Steuern des Schutzplatten-Bewegungsteils (130).

2. Vorrichtung zur präzisen und rückverfolgbaren Probeninjektion nach Anspruch 1, wobei der Multiwell-Platten-Montageabschnitt (110) derart ausgebildet ist, dass er eine Höhe aufweist, bei der die Schutzplatte (120) und die Multiwell-Platte (200) voneinander beabstandet sind.

3. Vorrichtung zur präzisen und rückverfolgbaren Probeninjektion nach Anspruch 1, wobei der Einlass (121) derart ausgebildet ist, dass ein unterer Abschnitt einen kleineren Durchmesser als der obere Abschnitt aufweist, und
der untere Abschnitt des Einlasses (121) mit einer hohlen Anti-Kontaminationsplatte (122) versehen ist.

4. Vorrichtung zur präzisen und rückverfolgbaren Probeninjektion nach Anspruch 1, wobei der Schutzplatten-Bewegungsteil (130) ein erstes Schutzplatten-Bewegungsteil aufweist, und
das erste Schutzplatten-Bewegungsteil aufweist:
eine Y-Achsen-Anbringung (131), die mit einer Kante des Hauptkörpers (100) gekoppelt ist,
ein Y-Achsen-Teil (132), das die Y Achsen-Anbringung (131) in einer Y-Achsenrichtung verbindet,
einen Y Achsen-Schieber (133), der sich in der Y-Achsenrichtung entlang des Y-Achsen-Teils (132) bewegt,
ein X-Achsen-Teil (134), dessen beide Enden mit dem Y Achsen-Schieber (133) in einer X-Achsenrichtung gekoppelt sind, und
einen X-Achsen-Schieber (135), der sich entlang des X-Achsen-Abschnitts (134) bewegt und mit einer oberen Fläche der Schutzplatte (120) gekoppelt ist.

5. Vorrichtung zur präzisen und rückverfolgbaren Probeninjektion nach Anspruch 1, wobei das Schutzplatten-Bewegungsteil (130) ein zweites Schutzplatten-Bewegungsteil aufweist, und
das zweite Schutzplatten-Bewegungsteil umfasst:
eine Y-Achsen-Anbringung (131-1), die mit einer Kante des Hauptkörpers (100) gekoppelt ist,
eine Y-Achsen-Spindel (139-1), die die Y-Achsen-Anbringung (131) in einer Y-Achsenrichtung verbindet,
einen Y Achsen-Schieber (133-1), der sich in der Y-Achsenrichtung entlang der Y-Achsen-Spindel (139-1) bewegt,
eine X-Achsen-Spindel (139-2), deren beide Enden mit dem Y-Achsen-Schieber (133-1) in einer X-Achsenrichtung gekoppelt sind, und
einen X-Achsen-Schieber (135-1), der sich entlang der X-Achsen-Spindel (139-2) bewegt und mit einer oberen Fläche der Schutzplatte (120) gekoppelt ist.

6. Vorrichtung zur präzisen und rückverfolgbaren Probeninjektion nach Anspruch 5, wobei das zweite Schutzplatten-Bewegungsteil ferner einen Motor (139-3) zum Betätigen der X-Achsen-Spindel (139-1) und der X-Achsen-Spindel (139-2) aufweist.

7. Vorrichtung zur präzisen und rückverfolgbaren Probeninjektion nach Anspruch 1, wobei die Positionsmesseinheit eine Vielzahl von Permanentmagneten (124), die in der Schutzplatte (120) angeordnet sind, und einen Magnetsensor (105) aufweist, der in dem Hauptkörper (100) ausgebildet ist, um die Permanentmagneten (124) zu erfassen.

8. Vorrichtung zur präzisen und rückverfolgbaren Probeninjektion nach Anspruch 7, wobei die Positionsmesseinheit ferner einen Stab aus reinem Eisen (104) aufweist, der an dem Magnetsensor (105) ausgebildet ist und eine Länge aufweist, die einer Bewegungslänge der Schutzplatte (120) entspricht.

9. Vorrichtung zur präzisen und rückverfolgbaren Probeninjektion nach Anspruch 5, wobei die Positionsmesseinheit zumindest einen Permanentmagneten (124), der auf dem X-Achsen-Schieber (133-1) und auf dem X-Achsen-Schieber (135-1) angeordnet ist, und einen Magnetsensor (105) aufweist, der auf dem Hauptkörper (100) ausgebildet ist, um den Permanentmagneten (124) zu erfassen.

10. Vorrichtung zur präzisen und rückverfolgbaren Probeninjektion nach Anspruch 9, wobei die Positionsmesseinheit einen oder mehrere Permanentmagnete (124), die auf einem Y Achsen-Gleitblock (140) angeordnet sind, und einen Magnetsensor (105) zum Erfassen der Permanentmagnete (124) aufweist.

11. Vorrichtung zur präzisen und rückverfolgbaren Probeninjektion nach Anspruch 5, wobei das Schutzplatten-Bewegungsteil (130) ferner eine oder mehrere Y-Achsen-Spindeln (139-1) und eine Y-Achsen-Antriebseinheit (141) aufweist, die es ermöglicht, die Y-Achsen-Spindel(n) (139-1) zu verbinden, um gleichzeitig zu arbeiten.

12. Vorrichtung zur präzisen und rückverfolgbaren Probeninjektion nach Anspruch 11, wobei die Y-Achsen-Antriebseinheit (141) einen oder mehrere Permanentmagneten (124) und einen Magnetsensor (105) zum Erfassen der Permanentmagneten (124) aufweist.

## Revendications

1. Dispositif d'injection d'échantillon précise et traçable destiné à une plaque à cavités multiples, le dispositif comprenant :
un corps principal (100) ;
une partie (110) de montage de plaque à cavités multiples, prenant la forme d'une entaille sur une partie supérieure du corps principal (100), et conçue pour permettre l'insertion et le montage de la plaque à cavités multiples (200) ;
un panneau protecteur (120) positionné sur une surface supérieure du corps principal (100) comportant la partie (110) de montage de la plaque à cavités multiples, et comportant une entrée (121) pénétrant verticalement au niveau d'une position sélectionnée afin d'injecter un échantillon dans une cavité sélectionnée ;
une partie mobile (130) de panneau protecteur, permettant de déplacer le panneau protecteur (120) de sorte que l'entrée (121) soit positionnée dans la cavité sélectionnée ;
une unité de mesure de position permettant de mesurer des informations de position de la cavité de la plaque à cavités multiples (200) dans laquelle l'entrée (121) est positionnée ;
un capteur (106) de code-barres permettant d'acquérir des informations de code-barres d'un échantillon ; et
une carte de circuit imprimé (103) permettant d'enregistrer et de communiquer les informations de position de la cavité et les informations de code-barres de l'échantillon, et de commander la partie mobile (130) du panneau protecteur.

2. Le dispositif d'injection d'échantillon précise et traçable de la revendication 1, dans lequel la partie (110) de montage de la plaque à cavités multiples est formée de façon à présenter une hauteur à laquelle le panneau protecteur (120) et la plaque à cavités multiples (200) sont espacés.

3. Le dispositif d'injection d'échantillon précise et traçable de la revendication 1, dans lequel l'entrée (121) est formée de telle manière qu'une partie inférieure présente un diamètre plus petit que la partie supérieure, et
la partie inférieure de l'entrée (121) est munie d'une plaque anticontamination creuse (122).

4. Le dispositif d'injection d'échantillon précise et traçable de la revendication 1, dans lequel la partie mobile (130) du panneau protecteur comporte une première partie mobile de panneau protecteur, et
la première partie mobile du panneau protecteur comprend :
un accessoire (131) sur l'axe Y, accouplé à un bord du corps principal (100),
une partie (132) sur l'axe Y, permettant de relier l'accessoire (131) sur l'axe Y dans une direction de l'axe Y,
un coulisseau (133) sur l'axe Y, se déplaçant dans la direction de l'axe Y le long de la partie (132) sur l'axe Y,
une partie (134) sur l'axe X, dont ses deux extrémités sont accouplées au coulisseau (133) sur l'axe Y dans une direction de l'axe X, et
un coulisseau (135) sur l'axe X, se déplaçant le long de la partie (134) sur l'axe X et accouplé à une surface supérieure du panneau protecteur (120).

5. Le dispositif d'injection d'échantillon précise et traçable de la revendication 1, dans lequel la partie mobile (130) du panneau protecteur comporte une seconde partie mobile de panneau protecteur, et
la seconde partie mobile du panneau protecteur comprend :
un accessoire (131-1) sur l'axe Y, accouplé au bord du corps principal (100),
une vis (139-1) sur l'axe Y, permettant de relier l'accessoire (131-1) sur l'axe Y dans une direction de l'axe Y,
un coulisseau (133-1) sur l'axe Y, se déplaçant dans la direction de l'axe Y le long de la vis (139-1) sur l'axe Y,
une vis (139-2) sur l'axe X, dont ses deux extrémités sont accouplées au coulisseau (133-1) sur l'axe Y dans une direction de l'axe X, et
un coulisseau (135-1) sur l'axe X, se déplaçant le long de la vis (139-2) sur l'axe X et accouplé à une surface supérieure du panneau protecteur (120).

6. Le dispositif d'injection d'échantillon précise et traçable de la revendication 5, dans lequel la seconde partie mobile du panneau protecteur comprend en outre un moteur (139-3) permettant d'actionner la vis (139-1) sur l'axe Y et la vis (139-2) sur l'axe X.

7. Le dispositif d'injection d'échantillon précise et traçable de la revendication 1, dans lequel l'unité de mesure de position comprend une pluralité d'aimants permanents (124) disposés dans le panneau protecteur (120), et un capteur magnétique (105) formé dans le corps principal (100) afin de détecter les aimants permanents (124).

8. Le dispositif d'injection d'échantillon précise et traçable de la revendication 7, dans lequel l'unité de mesure de position comprend en outre une tige en fer épuré (104) formée sur le capteur magnétique (105), et présentant une longueur correspondant à une longueur de déplacement du panneau protecteur (120).

9. Le dispositif d'injection d'échantillon précise et traçable de la revendication 5, dans lequel l'unité de mesure de position comprend au moins un aimant permanent (124) disposé sur le coulisseau (133-1) sur l'axe Y et sur le coulisseau (135-1) sur l'axe X, et un capteur magnétique (105) formé sur le corps principal (100) afin de détecter l'aimant permanent (124).

10. Le dispositif d'injection d'échantillon précise et traçable de la revendication 9, dans lequel l'unité de mesure de position comprend un ou plusieurs aimants permanents (124) disposés sur un bloc glissant (140) sur l'axe Y, et un capteur magnétique (105) permettant de détecter les aimants permanents (124).

11. Le dispositif d'injection d'échantillon précise et traçable de la revendication 5, dans lequel la partie mobile (130) du panneau protecteur comprend en outre une ou plusieurs vis (139-1) sur l'axe Y et une unité d'entraînement (141) sur l'axe Y permettant de relier la ou les vis (139-1 ) sur l'axe Y afin de fonctionner simultanément.

12. Le dispositif d'injection d'échantillon précise et traçable de la revendication 11, dans lequel l'unité d'entraînement (141) sur l'axe Y comprend un ou plusieurs aimants permanents (124) et un capteur magnétique (105) permettant de détecter les aimants permanents (124).
